# EUROPEAN PATENT SPECIFICATION

(11) **EP 4 350 825 B1**
(45) Date of publication and mention of the grant of the patent: **11.06.2025**
(21) Application number: 23197360.3
(22) Date of filing: 14.09.2023
(51) Int. Cl.: H01M 10/04, H01M 10/0587, H01M 50/107, H01M 50/152, H01M 50/167, H01M 50/184, H01M 50/186, H01M 50/342, H01M 50/528, H01M 50/531, H01M 50/536, H01M 50/538, H01M 50/545, H01M 50/547

(54) **RECHARGEABLE BATTERY**
WIEDERAUFLADBARE BATTERIE
BATTERIE RECHARGEABLE

(30) Priority: 06.10.2022 KR 20220128114
(43) Date of publication of application: 10.04.2024
(73) Proprietor: Samsung SDI Co., Ltd., Yongin-si, Gyeonggi-do 17084 (KR)
(72) Inventor: KO, Sunggwi, 17084 Yongin-si (KR); AHN, Jeongchull, 17084 Yongin-si (KR); PARK, Gungue, 17084 Yongin-si (KR)
(74) Representative: Marks & Clerk LLP

(56) References cited:
- EP-A1- 4 047 702
- WO-A1-2022/177377
- SE-A1- 2 150 507

## Description

### BACKGROUND OF THE INVENTION

### (a) Field of the Invention

The present disclosure relates to a rechargeable battery, and more particularly, to a rechargeable battery that may connect a current collecting plate to a case at one side of a gasket.

### (b) Description of the Related Art

Demand for rechargeable batteries as an energy source is increasing according to demand for mobile devices and technological development. For example, a cylindrical rechargeable battery includes an electrode assembly for charging and discharging, a case accommodating the electrode assembly, and a cap assembly electrically connected to the electrode assembly to seal an opening side of the case. Such rechargeable batteries are disclosed in WO2022/177377 and EP4047702.

For example, the electrode assembly is formed by disposing a positive electrode and a negative electrode on both surfaces of a separator, and winding the positive electrode, the separator, and the negative electrode in a jelly roll form. In the electrode assembly, one electrode is connected to the cap assembly through the current collecting plate, and the other electrode is connected to the case through a lead tab.

The cap assembly includes a current interrupt device (CID), and in this case, the opening of the case is closed and sealed by a beading portion and a crimping portion interposing a gasket between the current interrupt device and the case. In this case, as the gasket is compressed by the beading portion and the crimping portion, an inner end of the gasket may interfere with the current collecting plate, and in this case, the sealing force of the gasket with respect to the opening may be deteriorated.

In order to maintain the sealing force of the gasket, the current collecting plate may be connected to the beading portion of the case at one side of the gasket. In this case, an interference phenomenon in which one portion of the current collecting plate is connected to an electrode uncoated portion and the other portion of the current collecting plate presses the electrode uncoated portion may occur.

### SUMMARY OF THE INVENTION

The present disclosure has been made in an effort to provide a rechargeable battery that may prevent interference between a current collecting plate and an electrode uncoated portion while securing sealing force of a case opening by a gasket.

An embodiment provides a rechargeable battery as defined in claim 1 as appended hereto, including: an electrode assembly formed by winding a first electrode, a separator, and a second electrode; a case accommodating the electrode assembly; an electrode terminal installed in an insulating state at a first opening on one side of the case; a first current collecting plate that connects the first electrode to the electrode terminal; a vent plate sealing a second opening on the other side of the case; a second current collecting plate connecting the second electrode to a beading portion of the case at an inner side of the vent plate; and a gasket interposed between the second collecting plate and the vent plate and between the second collecting plate and the case to perform a sealing action by a crimping portion connected to the beading portion, wherein the second current collecting plate includes a base portion disposed on an uncoated portion of the second electrode, a bottom welding portion extending in a radial direction from the base portion and welded to the uncoated portion of the second electrode, and a wing welding portion spaced apart from the bottom welding portion to be connected to the base portion by an elastic portion and welded to the beading portion.

A plurality of the bottom welding portions and a plurality of the wing welding portions may be respectively formed to be alternately disposed in a circumferential direction on the base portion.

A through-hole may be formed in a center of the base portion, and the bottom welding portion and the elastic portion may be connected by a concave groove at the base portion.

**The** bottom welding portion may form a first welding line along a radial direction, and the wing welding portion may form a second welding line along a circumferential direction.

**The** wing welding portion may extend in a circumferential direction to be longer than a width of the elastic portion.

**The** elastic portion includes a first elastic bending portion that is connected to the base portion to be upwardly bent and then is outwardly bent based on a radial direction, and a second elastic bending portion that is connected to the first elastic bending portion to be upwardly bent and then is outwardly inclined-bent based on a radial direction to be connected to the wing welding portion.

The gasket may be provided with an escape groove accommodating the wing welding portion.

The beading portion may be provided with a flat portion formed on an upper side of an inwardly convex curved portion, and the wing welding portion may be welded to the flat portion.

The escape groove may be formed at a right angle at a side of the wing welding portion, and may be formed at an obtuse angle corresponding to the second elastic bending portion at an inner side based on the radial direction.

A notch may be formed on an inner surface of the vent plate.

At least some of the above and other features of the invention are set out in the claims.

As described above, according to the embodiment of the present disclosure, since a gasket is sealed by a crimping portion interposed between a second current collecting plate and a case and connected to a beading portion, it is possible to secure sealing force of a case opening by the gasket and to prevent interference between the second current collecting plate and an electrode uncoated portion.

### BRIEF DESCRIPTION OF THE DRAWINGS

FIG. 1 illustrates a longitudinal cross-sectional view of a rechargeable battery according to an embodiment of the present disclosure.
FIG. 2 illustrates a cross-sectional view of a state before a vent plate is coupled by interposing a gasket into a second opening of a case of FIG. 1.
FIG. 3 illustrates a perspective view of a second current collecting plate applied to FIG. 1.
FIG. 4 illustrates a cross-sectional view of a gasket applied to FIG. 2.
FIG. 5 illustrates a cross-sectional view of a state in which a vent plate is coupled to a second opening of a case with a gasket interposed in the state of FIG. 2.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

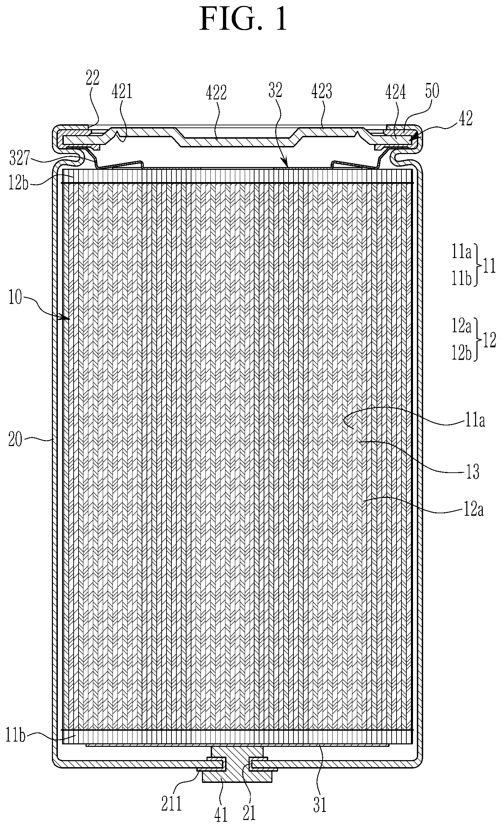

FIG. 1 illustrates a longitudinal cross-sectional view of a rechargeable battery according to an embodiment of the present disclosure. Referring to FIG. 1, the rechargeable battery according to the embodiment includes an electrode assembly 10 that functions for charging and discharging, a case 20 accommodating the electrode assembly 10, and a first current collecting plate 31, a second current collecting plate 32, and an electrode terminal 41 connected to the electrode assembly 10, a vent plate 42, and a gasket 50.

The electrode assembly 10 is formed in a jelly roll state by winding a first electrode 11, a separator 13, and a second electrode 12. The first electrode 11 and the second electrode 12 include coating portions 11a and 12a in areas in which active materials are applied on both surfaces of substrates respectively formed of thin metal plates, and non-coated portions 11b and 12b in areas in which the active materials are not applied and the substrates are exposed.

As an example, the first electrode 11 may form a positive electrode by coating a positive electrode active material on an aluminium (Al) substrate, and the second electrode 12 may form a negative electrode by coating a negative electrode active material on a copper (Cu) substrate. The uncoated portions 11b and 12b of the first and second electrodes 11 and 12 are provided at both ends of the electrode assembly 10 in a direction of a winding axis (both upper and lower ends in FIG. 1), but are provided together with the electrode terminal 41 and the case 20 having different polarities in the same direction. The vent plate 42 is disposed at the opposite side of the electrode terminal 41.

The case 20 is formed in a cylindrical shape to accommodate the electrode assembly 10, and the electrode terminal 41 and the vent plate 42 are provided at both ends of the case 20 in the axial direction by the uncoated portions 11b and 12b, respectively. The electrode terminal 41 is connected to the first electrode 11 by the first current collecting plate 31, and the case 20 is connected to the second electrode 12 by the second current collecting plate 32. In this case, the vent plate 42 is electrically separated from the second collecting plate 32 and the case 20 and has no polarity.

The electrode terminal 41 connected to the first electrode 11 of the electrode assembly 10 inserted into the case 20 from the outside is installed at one side of the case 20. To this end, the case 20 includes a first opening 21 partially opened on one side. The electrode terminal 41 is installed in an electrical insulation state from the case 20 while forming an airtight structure with respect to an electrolyte by interposing a sealing member 211 in the first opening 21.

In this case, the first current collecting plate 31 is electrically connected to the uncoated portion 11b of the first electrode 11 to be electrically and mechanically connected to the electrode terminal 41. The first current collecting plate 31 is electrically connected to the electrode terminal 41 in a structure that reduces resistance by contacting most of the uncoated portion 11b of the first electrode 11.

As an example, the electrode terminal 41 may be connected to the first collecting plate 31 by welding at one end and installed in the first opening 21 of the case 20 in a rivet structure. The electrode terminal 41 may be formed to protrude from an outer surface of the case 20 around the first opening 21 to be used as a positive electrode terminal. In this case, the first current collecting plate 31 becomes a positive electrode current collecting plate.

In addition, the case 20 has a second opening 22 that is completely opened to insert the electrode assembly 10 into the other side. The vent plate 42 seals the second opening 22 after inserting the electrode assembly 10 into the case 20, and is electrically separated from the case 20.

In this case, the second current collecting plate 32 is electrically connected to the uncoated portion 12b of the second electrode 12 to be electrically connected to the case 20. The second current collecting plate 32 is connected to case 20 in a structure that reduces resistance by contacting most of the uncoated portion 12b of the second electrode 12.

The vent plate 42 is electrically separated from the second collecting plate 32, and is installed in the second opening 22 of the case 20 through a crimping process. Due to the connection of the second collecting plate 32, the case 20 may be used as a negative electrode terminal. In this case, the second current collecting plate 32 becomes a negative electrode current collecting plate.

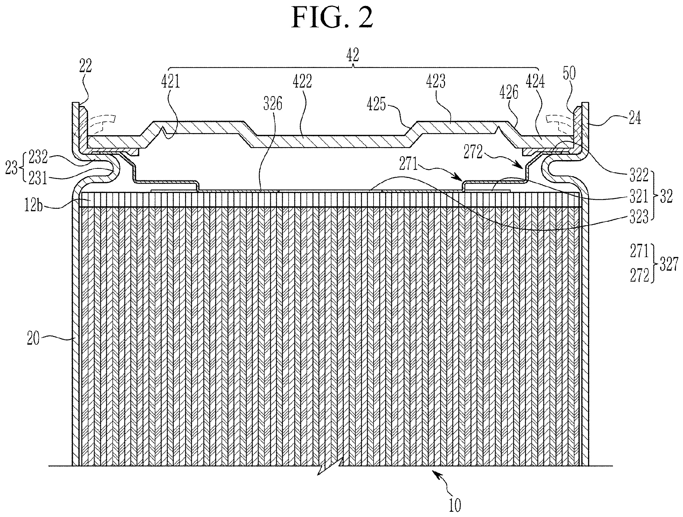

FIG. 2 illustrates a cross-sectional view of a state before a vent plate is coupled by interposing a gasket into a second opening of a case of FIG. 1. Referring to FIG. 1 and FIG. 2, the second current collecting plate 32 connects the second electrode 12 to the beading portion 23 of the case 20.

Through a beading process, a beading portion 23 is formed adjacent to the second opening 22 of the case 20, and a crimping portion 24 connected to the beading portion 23 is formed through a crimping process. That is, the case 20 includes the beading portion 23 and the crimping portion 24.

The beading portion 23 has a structure in which the electrode assembly 10 is recessed toward a center in a diameter direction of the case 20 from an upper side of the case 20 while the electrode assembly 10 is accommodated in the case 20, thereby preventing the electrode assembly 10 from moving up and down.

The crimping portion 24 is connected to the beading portion 23 in a structure that relatively further protrudes from the beading portion 23 in the diameter direction. By the crimping process, the beading portion 23 is inclined downward while inwardly moving based on the diameter direction.

The gasket 50 is used in the crimping process. After the crimping process, the gasket 50 is interposed between the second collecting plate 32 and the vent plate 42 and between the second collecting plate 32 and the case 20 to perform sealing-function by the beading portion 23 and the clamping portion 24 connected thereto. **In** addition, the gasket 50 forms an airtight structure with respect to the electrolyte solution between the second collecting plate 32 and the second opening 22 of the case 20.

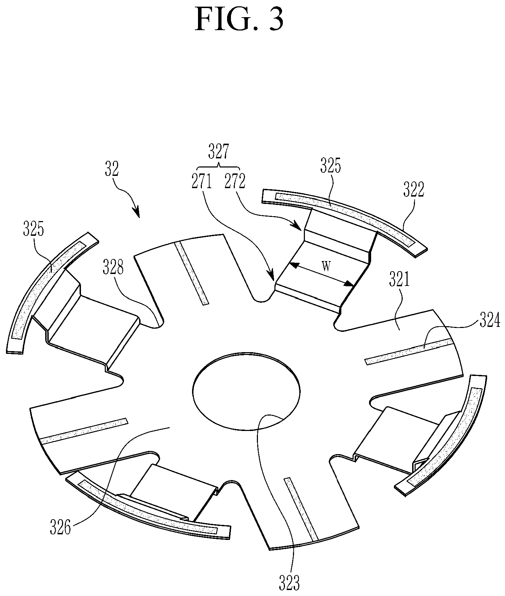

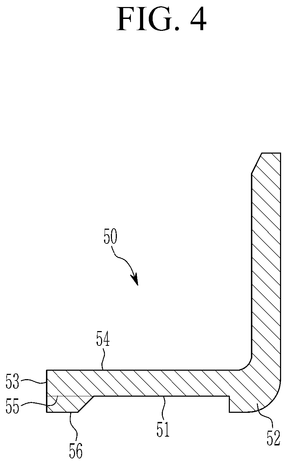

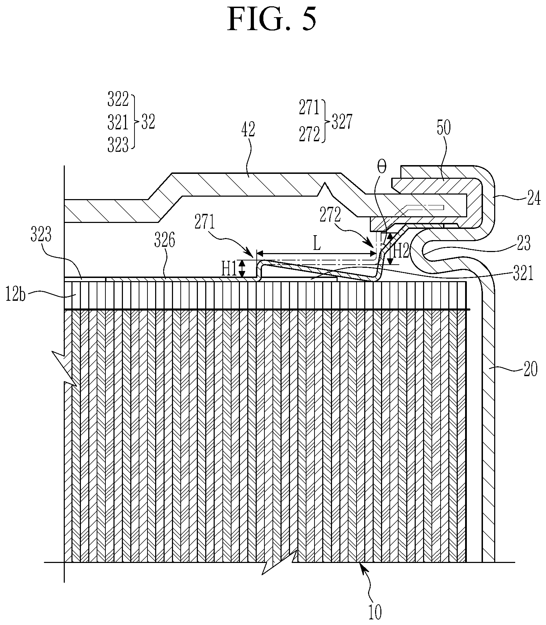

FIG. 3 illustrates a perspective view of the second current collecting plate applied to FIG. 1. FIG. 4 illustrates a cross-sectional view of the gasket applied to FIG. 2. FIG. 5 illustrates a cross-sectional view of a state in which the vent plate is coupled to the second opening of the case with the gasket interposed in the state of FIG. 2.

Referring to FIG. 3 to FIG. 5, the second current collecting plate 32 includes a base portion 326, a bottom welding portion 321, an elastic portion 327, and a welding wing portion 322. **The** base portion 326 is placed on the uncoated portion 12b of the second electrode 12.

**The** bottom welding portion 321 extends in a radial direction from the base portion 326 to be welded to the uncoated portion 12b of the second electrode 12. **The** welding wing portion 322 is spaced apart from the bottom welding portion 321, is connected to the base portion 326 by the elastic portion 327, and is welded to the beading portion 23.

**The** second current collecting plate 32 is formed by cutting and bending an original plate, and has a plurality of bottom welding portions 321 and wing welding portions 322, respectively. **The** bottom welding portion 321 and the wing welding portion 322 are alternately disposed in the base portion 326 along a circumferential direction. Accordingly, the bottom welding portion 321 and the wing welding portion 322 may form a balanced structure along the circumferential direction.

During welding, the bottom welding portion 321 forms a first welding line 324 in the diameter direction. **The** wing welding portion 322 forms a second welding line 325 along the circumferential direction. **The** wing welding portion 322 extends in the circumferential direction to be longer than a width W of the elastic portion 327.

Accordingly, the bottom welding portion 321 is evenly connected along the circumferential direction in the area of the uncoated portion 12b, and the wing welding portion 322 is evenly connected along the circumferential direction in the area of the beading portion 23. **In** the second electrode 12, a uniform current flow is possible along the circumferential direction in the entire area of the beading portion 23 of the case 20.

**The** elastic portion 327 may repeatedly form bending in an axial direction (upward) and bending in an outer radial direction. As an example, the elastic portion 327 includes a first elastic bending portion 271 and a second elastic bending portion 272.

**The** first elastic bending portion 271 is connected to the base portion 326 to be bent upwardly and then to be bent outwardly based on the radial direction. An upward height **H1** of the first elastic bending portion 271 prevents the second elastic bending portion 272 from being separated from the uncoated portion 12b to interfere with the uncoated portion 12b.

**The** second elastic bending portion 272 is connected to the first elastic bending portion 271 to be bent upward and then is outwardly inclined-bent based on the radial direction to be connected to the wing welding portion 322. A bent upward height H2 of the second elastic bending portion 272 and an inclined angle θ thereof outwardly inclined-bent based on the radial direction prevent interference with the beading portion 23.

A length L from a bending start point to the upward bending point of the second elastic bending portion 272 in the radial outer direction of the first elastic bending portion 271 imparts elasticity to the elastic portion 327, so that the upwardly bending point of the second elastic bending portion 272 has a force to move upward from the uncoated portion 12b. Accordingly, the length L of the elastic portion 327 further prevents the second elastic bending portion 272 from interfering with the uncoated portion 12b by separating it from the uncoated portion 12b.

In addition, the base portion 326 has a through-hole 323 in a center thereof, and the bottom welding portion 321 and the elastic portion 327 are connected to a concave groove 328 in the base portion 326. The through-hole 323 and the concave groove 328 may absorb and alleviate deformation caused by welding the bottom welding portion 321 and the uncoated portion 12b and vibration and impact that may be transmitted between the wing welding portion 322 and the bottom welding portion 321. The through-hole 323 and the concave groove 328 may have a size within a range capable of absorbing vibration and impact without increasing current resistance between the wing welding portion 322 and the bottom welding portion 321.

The beading portion 23 includes a flat portion 232 formed parallel to a flat surface formed by a cross-section of the uncoated portion 12b at an upper side of an inwardly convex curved portion 231. The wing welding portion 322 of the second current collecting plate 32 is welded to the flat portion 232. Accordingly, the second collecting plate 32 is stably contacted and welded to the beading portion 23 of the case 20 to further realize a uniform flow of current.

In addition, since the wing welding portion 322 extends further along the circumferential direction from the end than the width W connected to the base portion 326, the contact area and welding area with the flat portion 232 may be further increased to prevent an increase in resistance in the welding portion.

In this case, the gasket 50 has an escape groove 51 accommodating the wing welding portion 322. The escape groove 51 increases stability of the gasket 50 by reducing deformation of the gasket 50 between the wing welding portion 322 and the vent plate 42 during the crimping process.

**The** gasket 50 further includes a compression portion 52 that comes into contact with the flat portion 232 at the outer side based on the radial direction of the escape groove 51 to act as a compression airtight seal. Despite the escape groove 51, the compression portion 52 implements a sufficient airtight action between the flat portion 232 and the vent plate 42.

**The** escape groove 51 is formed at a right angle at the compression portion 52 side to stably accommodate the end of the wing welding portion 322 to prevent misalignment between the wing welding portion 322 and the gasket 50. **The** escape groove 51 may be formed at an obtuse angle at the inner side based on the radial direction to induce coupling of the bending structure of the wing welding portion 322, the elastic portion 327, and the second elastic bending portion 272 and to stably accommodate the bending structure of the wing welding portion 322, the elastic portion 327, and the second elastic bending portion 272. **The** wing welding portion 322, the elastic portion 327, and the second elastic bending portion 272 may be bent to correspond to the obtuse structure of the escape groove 51.

Referring to FIG. **4****,** the gasket 50 has a through-hole 53 inside the escape groove 51 in the radius direction. **The** through-hole 53 connects an upper surface 54 and a lower surface 55 of the gasket 50 at right angles to the side thereof. **The** gasket 50 further includes a convex portion 56 convexly formed at the inside to further form the through-hole 53 inward in a through-direction. **The** convex portion 56 prevents the bending structure of the wing welding portion 322, the elastic portion 327, and the second elastic bending portion 272 from being pushed to the vent plate 42.

Since the through-hole 53 of the gasket 50 is formed to correspond to an outer portion 424 of the vent plate 42, the inner side of the gasket 50 compressed and deformed by the crimping process may be prevented from interfering with the second collecting plate 32.

**The** vent plate 42 forms a notch 421 on the inner surface thereof. During a rechargeable battery event, the notch 421 is cut to discharge internal pressure, thereby preventing secondary explosion. **The** vent plate 42 is formed in a circular plate and includes a central portion 422, a convex portion 423, and the outer portion 424.

**The** central portion 422 is formed to be concave toward the electrode assembly 10, the convex portion 423 is formed to be convex so as to be away from the electrode assembly 10 at the outer side based on the diameter direction of the center portion 422, and the outer portion 424 forms the same plane as the central portion 422 toward the electrode assembly 10 at the outer side based on the diameter direction of the convex portion 423.

That is, an inner inclined surface 425 and an outer inclined surface 426 are formed at a portion where the central portion 422 and the convex portion 423 are connected and a portion where the convex portion 423 and the outer portion 424 are connected. The inner inclined surface 425 and the outer inclined surface 426 increase the rigidity of the vent plate 42 against the internal pressure of the rechargeable battery.

The notch 421 is formed on the inner surface of the convex portion 423 and the outer inclined surface 426 to receive intensive internal pressure during an event so that it may be easily cut. The notch 421 may be formed in the entire area along the circumferential direction of the vent plate 42, or may be formed in a plurality spaced apart at predetermined intervals.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

**<Description of symbols>**

| | | | |
|---|---|---|---|
| 10: | electrode assembly | 11: | first electrode |
| 11a, 12a: | coating portion | 11b, 12b: | uncoated portion |
| 12: | second electrode | 13: | separator |
| 20: | case | 21: | first opening |
| 22: | second opening | 23: | beading portion |
| 24: | crimping portion | 31: | first current collecting plate |
| 32: | second current collecting plate | 41: | electrode terminal |
| 42: | vent plate | 50: | gasket |
| 51: | escape groove | 52: | compression portion |
| 53, 323: | through-hole | 54: | upper surface |
| 55: | lower surface | 56: | convex portion |
| 211: | sealing member | | |
| 231: | inwardly convex curved portion | 232: | flat portion |
| 271: | first elastic bending portion | | |
| 272: | second elastic bending portion | | |
| 321: | bottom welding portion | 322: | wing welding portion |
| 324: | first welding line | 325: | second welding line |
| 326: | base portion | 327: | elastic portion |
| 328: | concave groove | 421: | notch |
| 422: | central portion | 423: | convex portion |
| 424: | outer portion | 425: | inner inclined surface |
| 426: | outer inclined surface | H1, H2: | upward height |
| L: | length | W: | width of elastic portion |
| θ: | inclination angle | | |

## Claims

1. A rechargeable battery comprising:
an electrode assembly (10) formed by winding a first electrode (11), a separator (13), and a second electrode (12);
a case (20) accommodating the electrode assembly (10);
an electrode terminal (41) installed in an insulating state at a first opening (21) on one side of the case (20);
a first current collecting plate (31) that connects the first electrode (41) to the electrode terminal (41);
a vent plate (42) sealing a second opening (22) on the other side of the case (20);
a second current collecting plate (32) connecting the second electrode (12) to a beading portion (23) of the case (20) at an inner side of the vent plate (42); and
a gasket (50) interposed between the second current collecting plate (32) and the vent plate (42) and between the second current collecting plate (32) and the case (20) to perform a sealing action by a crimping portion (24) connected to the beading portion (23),
wherein the second current collecting plate (32) comprises
a base portion (326) disposed on an uncoated portion (12b) of the second electrode (12),
a bottom welding portion (321) extending in a radial direction from the base portion (326) and welded to the uncoated portion (12b) of the second electrode (12), and
a wing welding portion (322) spaced apart from the bottom welding portion (321) to be connected to the base portion (326) by an elastic portion (327) and welded to the beading portion (23);
wherein
the elastic portion (327) comprises
a first elastic bending portion (271) that is connected to the base portion (326) to be upwardly bent and then is outwardly bent based on a radial direction, and
a second elastic bending portion (272) that is connected to the first elastic bending portion (271) to be upwardly bent and then is outwardly inclined-bent based on a radial direction to be connected to the wing welding portion (322).

2. **The** rechargeable battery as claimed in claim 1, wherein
a plurality of the bottom welding portions (321) and a plurality of the wing welding portions (322) are respectively formed to be alternately disposed in a circumferential direction on the base portion (326).

3. **The** rechargeable battery as claimed in claim 2, wherein
a through-hole (323) is formed in a center of the base portion (326), and
the bottom welding portion (321) and the elastic portion (327) are connected by a concave groove (328) at the base portion (326).

4. **The** rechargeable battery as claimed in claim 3, wherein
the bottom welding portion (321) forms a first welding line (324) along a radial direction, and
the wing welding portion (322) forms a second welding line (325) along a circumferential direction.

5. **The** rechargeable battery as claimed in claim **4,** wherein
the wing welding portion (322) extends in a circumferential direction to be longer than a width of the elastic portion (327).

6. **The** rechargeable battery as claimed in any one of claims 1 to 5, wherein
the gasket (50) is provided with an escape groove (51) accommodating the wing welding portion (322).

7. **The** rechargeable battery as claimed in claim 6, wherein
the beading portion (23) is provided with a flat portion (232) formed on an upper side of an inwardly convex curved portion (231), and
the wing welding portion (322) is welded to the flat portion (232).

8. **The** rechargeable battery as claimed in claim 7, wherein
the escape groove (51) is formed at a right angle at a side of the wing welding portion (322) and formed at an obtuse angle corresponding to the second elastic bending portion (272) at an inner side based on the radial direction.

9. The rechargeable battery as claimed in any one of claims 1 to 8, wherein
a notch (421) is formed on an inner surface of the vent plate (42).

## Patentansprüche

1. Wiederaufladbare Batterie, umfassend:
eine Elektrodenanordnung (10), die durch Wickeln einer ersten Elektrode (11), eines Separators (13) und einer zweiten Elektrode (12) gebildet wird;
ein Gehäuse (20), das die Elektrodenanordnung (10) aufnimmt;
einen Elektrodenanschluss (41), der in einem isolierenden Zustand an einer ersten Öffnung (21) auf einer Seite des Gehäuses (20) installiert ist;
eine erste Stromsammelplatte (31), die die erste Elektrode (41) mit dem Elektrodenanschluss (41) verbindet;
eine Entlüftungsplatte (42), die eine zweite Öffnung (22) auf der anderen Seite des Gehäuses (20) verschließt;
eine zweite Stromsammelplatte (32), die die zweite Elektrode (12) mit einem Wulstteil (23) des Gehäuses (20) an einer Innenseite der Entlüftungsplatte (42) verbindet; und
eine Dichtung (50), die zwischen der zweiten Stromsammelplatte (32) und der Entlüftungsplatte (42) und zwischen der zweiten Stromsammelplatte (32) und dem Gehäuse (20) angeordnet ist, um eine Abdichtung durch einen Quetschabschnitt (24) auszuführen, der mit dem Wulstabschnitt (23) verbunden ist,
wobei die zweite Stromsammelplatte (32) umfasst
einen Basisabschnitt (326), der auf einem unbeschichteten Abschnitt (12b) der zweiten Elektrode (12) angeordnet ist,
einen Bodenschweißabschnitt (321), der sich in einer radialen Richtung von dem Basisabschnitt (326) erstreckt und mit dem unbeschichteten Abschnitt (12b) der zweiten Elektrode (12) verschweißt ist, und
einen Flügelschweißabschnitt (322), der von dem Bodenschweißabschnitt (321) beabstandet ist, um mit dem Basisabschnitt (326) durch einen elastischen Abschnitt (327) verbunden zu werden und mit dem Wulstabschnitt (23) verschweißt ist;
wobei
der elastische Abschnitt (327) umfasst
einen ersten elastischen Biegeabschnitt (271), der mit dem Basisabschnitt (326) verbunden ist, um nach oben gebogen zu werden, und dann basierend auf einer radialen Richtung nach außen gebogen wird, und
einen zweiten elastischen Biegeabschnitt (272), der mit dem ersten elastischen Biegeabschnitt (271) verbunden ist, um nach oben gebogen zu werden, und dann basierend auf einer radialen Richtung nach außen geneigt gebogen wird, um mit dem Flügelschweißteil (322) verbunden zu werden.

2. Wiederaufladbare Batterie nach Anspruch 1, wobei
eine Vielzahl der Bodenschweißabschnitte (321) und eine Vielzahl der Flügelschweißabschnitte (322) jeweils so ausgebildet sind, dass sie abwechselnd in einer Umfangsrichtung auf dem Basisabschnitt (326) angeordnet sind.

3. Wiederaufladbare Batterie nach Anspruch 2, wobei
ein Durchgangsloch (323) in einer Mitte des Basisabschnitts (326) ausgebildet ist, und
der Bodenschweißabschnitt (321) und der elastische Abschnitt (327) durch eine konkave Rille (328) am Basisabschnitt (326) verbunden sind.

4. Wiederaufladbare Batterie nach Anspruch 3, wobei
der Bodenschweißabschnitt (321) eine erste Schweißlinie (324) entlang einer radialen Richtung bildet, und
der Flügelschweißabschnitt (322) eine zweite Schweißlinie (325) entlang einer Umfangsrichtung bildet.

5. Wiederaufladbare Batterie nach Anspruch 4, wobei
der Flügelschweißabschnitt (322) sich in einer Umfangsrichtung so erstreckt, dass er länger ist als eine Breite des elastischen Teils (327).

6. Wiederaufladbare Batterie nach einem der Ansprüche 1 bis 5, wobei
die Dichtung (50) mit einer Ausweichrille (51) versehen ist, die den Flügelschweißabschnitt (322) aufnimmt.

7. Wiederaufladbare Batterie nach Anspruch 6, wobei
der Wulstabschnitt (23) mit einem flachen Abschnitt (232) versehen ist, der an einer Oberseite eines nach innen konvexen gewölbten Abschnitts (231) ausgebildet ist, und
der Flügelschweißabschnitt (322) mit dem flachen Abschnitt (232) verschweißt ist.

8. Wiederaufladbare Batterie nach Anspruch 7, wobei
die Ausweichrille (51) in einem rechten Winkel an einer Seite des Flügelschweißabschnitts (322) und in einem stumpfen Winkel entsprechend dem zweiten elastischen Biegeabschnitt (272) an einer Innenseite basierend auf der radialen Richtung ausgebildet ist.

9. Wiederaufladbare Batterie nach einem der Ansprüche 1 bis 8, wobei
an einer Innenfläche der Entlüftungsplatte (42) eine Kerbe (421) ausgebildet ist.

## Revendications

1. Batterie rechargeable comprenant :
un ensemble d'électrodes (10) formé par un enroulement d'une première électrode (11), d'un séparateur (13) et d'une deuxième électrode (12),
un boîtier (20) logeant l'ensemble d'électrodes (10),
une borne d'électrode (41) installée dans un état isolant au niveau d'une première ouverture (21) sur un côté du boîtier (20),
une première plaque collectrice de courant (31) qui connecte la première électrode (41) à la borne d'électrode (41),
une plaque d'évent (42) scellant une deuxième ouverture (22) sur l'autre côté du boîtier (20),
une deuxième plaque collectrice de courant (32) connectant la deuxième électrode (12) à une partie de bourrelet (23) du boîtier (20) au niveau d'un côté intérieur de la plaque d'évent (42), et
un joint (50) interposé entre la deuxième plaque collectrice de courant (32) et la plaque d'évent (42) et entre la deuxième plaque collectrice de courant (32) et le boîtier (20) pour exercer une action d'étanchéité par une partie de pincement (24) connectée à la partie de bourrelet (23),
dans laquelle la deuxième plaque collectrice de courant (32) comprend :
une partie de base (326) disposée sur une partie non revêtue (12b) de la deuxième électrode (12),
une partie de soudage de fond (321) s'étendant dans une direction radiale à partir de la partie de base (326) et soudée à la partie non revêtue (12b) de la deuxième électrode (12), et
une partie de soudage d'aile (322) espacée de la partie de soudage de fond (321) pour être connectée à la partie de base (326) par une partie élastique (327) et soudée à la partie de bourrelet (23),
dans laquelle
la partie élastique (327) comprend :
une première partie de courbure élastique (271) qui est connectée à la partie de base (326) de façon à être courbée vers le haut et est courbée ensuite vers l'extérieur selon une direction radiale, et
une deuxième partie de courbure élastique (272) qui est connectée à la première partie de courbure élastique (271) de façon à être courbée vers le haut et est courbée-inclinée ensuite vers l'extérieur selon une direction radiale pour être connectée à la partie de soudage d'aile (322).

2. Batterie rechargeable selon la revendication 1, dans laquelle
une pluralité des parties de soudage de fond (321) et une pluralité des parties de soudage d'aile (322) sont formées respectivement de façon à être disposées de manière alternée dans une direction circonférentielle sur la partie de base (326).

3. Batterie rechargeable selon la revendication 2, dans laquelle
un trou traversant (323) est formé dans un centre de la partie de base (326), et
la partie de soudage de fond (321) et la partie élastique (327) sont connectées par une rainure concave (328) au niveau de la partie de base (326).

4. Batterie rechargeable selon la revendication 3, dans laquelle
la partie de soudage de fond (321) forme une première ligne de soudure (324) le long d'une direction radiale, et
la partie de soudage d'aile (322) forme une deuxième ligne de soudure (325) le long d'une direction circonférentielle.

5. Batterie rechargeable selon la revendication 4, dans laquelle
la partie de soudage d'aile (322) s'étend dans une direction circonférentielle de façon à être plus longue qu'une largeur de la partie élastique (327).

6. Batterie rechargeable selon l'une quelconque des revendications 1 à 5, dans laquelle :
le joint (50) est équipé d'une rainure d'échappement (51) recevant la partie de soudage d'aile (322).

7. Batterie rechargeable selon la revendication 6, dans laquelle
la partie de bourrelet (23) est pourvue d'une partie plate (232) formée sur un côté supérieur d'une partie courbée convexe vers l'intérieur (231), et
la partie de soudage d'aile (322) est soudée à la partie plate (232).

8. Batterie rechargeable selon la revendication 7, dans laquelle
la rainure d'échappement (51) est formée à un angle droit sur un côté de la partie de soudage d'aile (322) et est formée à un angle obtus correspondant à la deuxième partie de courbure élastique (272) sur un côté intérieur dans la direction radiale.

9. Batterie rechargeable selon l'une quelconque des revendications 1 à 8, dans laquelle :
une échancrure (421) est formée sur une surface intérieure de la plaque d'évent (42).
